# EUROPEAN PATENT APPLICATION

(11) **EP 1 505 083 A1**
(43) Date of publication of application: **09.02.2005**
(21) Application number: 04017446.8
(22) Date of filing: 23.07.2004
(51) Int. Cl.: C08F 2/38, C08F 210/00

(54) **Method of improving reversion resistance**

(30) Priority: 05.08.2003 CA 2438931
(71) Applicant: Bayer Inc., Sarnia, ON N7T 7M2 (CA)
(72) Inventor: Gronowski, Adam, Sarnia ON N7S 3W2 (CA); Osman, Akhtar, Sarnia ON N7T 5X7 (CA); Glander, Stephan, 51375 Leverkusen (DE)
(74) Representative: Feldhues, Michael, Dr.

(57) **Abstract**

The present invention relates to a method of improving reversion resistance of a peroxide curable polymer comprising at least one polymer having repeating units derived from at least one isomonoolefin monomer and at least one aromatic divinyl monomer by polymerizing the monomers in the presence of at least one m- or p-diisoalkenylbenzene compound.

## Description

### FIELD OF THE INVENTION

The present invention relates to a method of improving reversion resistance of a peroxide curable polymer comprising at least one polymer having repeating units derived from at least one isomonoolefin monomer and at least one aromatic divinyl monomer by polymerizing the monomers in the presence of at least one m- or p-diisoalkenylbenzene compound.

### BACKGROUND

In many of its applications, isoolefin copolymers, in particular butyl rubber is used in the form of cured compounds.

Vulcanizing systems usually utilized for butyl rubber include sulfur, quinoids, resins, sulfur donors and low-sulfur high performance vulcanization accelerators. However, sulfur residues in 'the compound are often undesirable, e.g., they promote corrosion of parts in contact with the compound.

The preferred vulcanization system is based on peroxides since this produces an article free of detrimental residues. In addition, peroxide-cured compounds offer higher thermal resistance compared to that of sulfur-cured materials. For example, engine mounts associated with modem engines must be able to withstand temperatures as high as 150 °C. for periods in the range of 1,000 to 5,000 hours without significant loss of dynamic properties, in order to meet current and anticipated automotive standards. (see e.g. US-6,197,885-B1 and US-5,904,220). It is recognized, however, that the sulfur-cured butyl rubber system has thermal stability of up to 120 °C vs. 150 °C for peroxide- cured butyl-based polymers (e.g. JP-A-172547/1994).

If peroxides are used for crosslinking and curing of conventional butyl rubbers, the main chains of the rubber degrade and satisfactorily cured products are not obtained.

All known peroxide-curable isoolefin copolymers are prone to (thermally induced) reversion reactions. Reversion can be defined as the loss in vulcanizate properties on overcure, usually due to breakdown of crosslinks. It leads to a decline in compound physical properties such as modulus, tensile and elongation and in performance characteristics, e.g., tear, fatigue, etc.

Co-pending Canadian Application CA 2,316,741 discloses terpolymers of isobutylene, isoprene, divinylbenzene (DVB) prepared in the presence of a chain transfer agent, such as diisobutylene, which are substantially gel-free and have an improved processability. However, in contrast to the present invention, this prior art requires the presence of at least one multiolefin monomer (such as isoprene) and is silent about reversion resistance.

Canadian Application CA 2,386,628 discloses peroxide curable compounds comprising terpolymers of isobutylene, isoprene and divinylbenzene prepared in the presence of a chain transfer agent, such as diisobutylene, which are sustantailly gel-free and have an improved processability. However, in contrast to the present invention, this prior art requires the presence of at least one multiolefin monomer (such as isoprene) and is silent about reversion resistance.

Canadian Patent 817,939 teaches that in order to have peroxide-curable butyl-type polymer, the presence of an aliphatic diene, like isoprene, is not necessary in the polymerization mixture. However, in contrast to the present invention, this prior art does not teach the advantageous use of m- or p-diisoalkenylbenzene compounds and is silent about reversion resistance.

Co-pending Canadian Application CA-2,406,775 discloses peroxide curable compounds based on butyl-like polymer without conjugated aliphatic dienes in its composition. The said polymers had an average molecular weight Mₙ of more than 20,000 g/mol and contained less than 15 wt. % of solid matter insoluble in boiling cyclohexane under reflux for 60 min. However, in contrast to the present invention, this prior art is silent about reversion resistance.

### SUMMARY

The present invention relates to a method of improving reversion resistance of a peroxide curable polymer comprising at least one polymer having repeating units derived from at least one isomonoolefin monomer and at least one aromatic divinyl monomer by polymerizing the monomers in the presence of at least one m- or p-diisoalkenylbenzene compound.

### BRIEF DESCRIPTION OF THE DRAWINGS

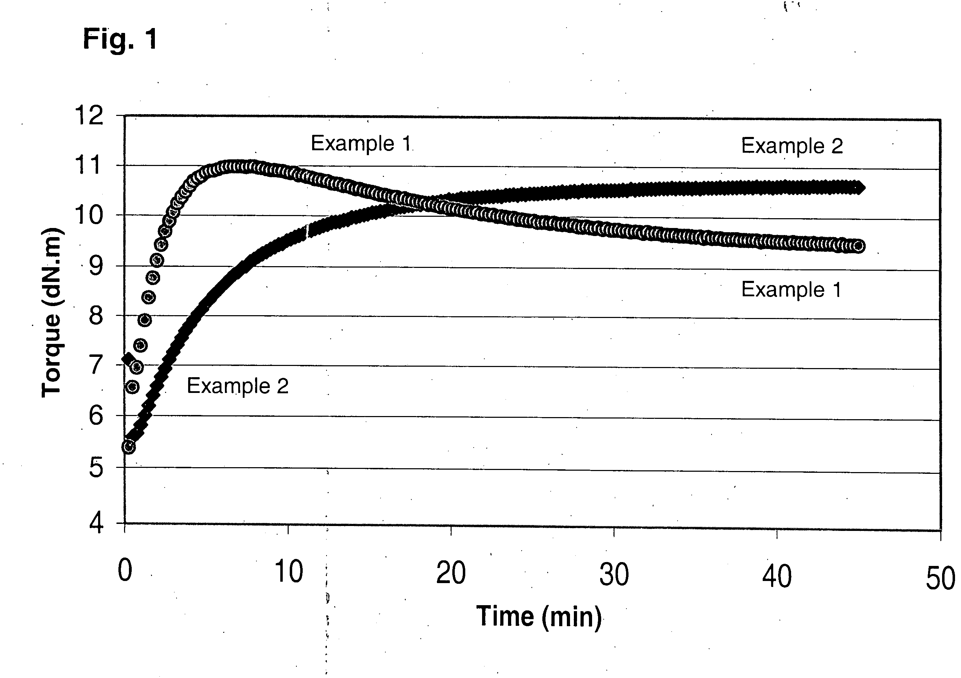

Fig. 1 shows the MDR traces of the compounds based on Polymers 1 and 2.

### DETAILLED DESCRIPTION OF THE INVENTION

The present invention preferably relates to butyl-like polymers. The terms "butyl rubber", "butyl polymer" and "butyl rubber polymer" are used throughout this specification interchangeably. While the prior art in using butyl rubber refers to polymers prepared by reacting a monomer mixture comprising a C₄ to C₇ isomonoolefin monomer and a C₄ to C₁₄ multiolefin monomer or β-pinene, this invention preferably relates to elastomeric polymers comprising repeating units derived from at least one C₄ to C₇ isomonoolefin monomer and at least one aromatic divinyl monomer, which due to the lack of multiolefin monomer/conjugated aliphatic diene or β-pinene in the monomer mixture have no double-bonds in the polymer chains.

In connection with this invention the term "essentially gel-free" is understood to denote a polymer containing less than 15 wt.% of solid matter insoluble in cyclohexane boiling under reflux during 60 min, preferably less than 10 wt.%, in particular less than 5 wt%.

The present invention is not restricted to any particular C₄ to C₇ isomonoolefin monomers. Preferred C₄ to C₇ monoolefins are isobutylene, 2-methyl-1-butene, 3-methyl-1-butene, 2-methyl-2-butene, 4-methyl-1-pentene and mixtures thereof. The most preferred C₄ to C₇ isomonoolefin monomer is isobutylene.

Further, the present invention is not restricted to any particular aromatic divinyl monomer. Examples of these are divinylbenzene, divinyltoluene, divinylxylene or C₁ to C₂₀ alkyl-substituted derivatives of the above compounds. More preferably, the aromatic divinyl monomer is divinylbenzene, divinyltoluene, or divinylxylene. Most preferably the aromatic divinyl monomer is divinylbenzene.

The monomer mixture preferably comprises no multiolefin monomers, such as isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene.

According to the present invention the monomer mixture further comprises at least one m- or p-diisoalkenylbenzene compound or a mixture thereof.

The present invention is not restricted to any particular m- or p-diisoalkenylbenzene provided that the m- or p-diisoalkenylbenzene is copolymerisable with the other monomers present. Examples of suitable m- or p-diisoalkenylbenzenes are the meta- or para-.isomers of diisopropenylbenzene and dimethallylbenzene.

Preferably, the monomer mixture to be polymerized comprises in the range of from 65 % to 98.99 % by weight of at least one. C₄ to C₇ isomonoolefin monomer, in the range of from 1.0 % to 20% by weight of at least one aromatic divinyl monomer, and in the range of from 0.01 % to 15 % by weight of at least one m- or p-diisoalkenylbenzene compound or a mixture thereof. More preferably, the monomer mixture comprises in the range of from 70 % to 98.95 % by weight of a C₄ to C₇ isomonoolefin monomer, in the range of from 1.0 % to 15% by weight of at least one aromatic divinyl monomer, in the range of from 0.05 % to 15 % by weight of at least one m- or p-diisoalkenylbenzene compound or a mixture thereof. It will be apparent to the skilled in the art that the total of all monomers will result in 100 % by weight.

The monomer mixture may contain minor amounts of one or more additional polymerizable co-monomers. For example, the monomer mixture may contain a small amount of a styrenic monomer. Preferred styrenic monomers are p-methylstyrene, styrene, α-methyl-styrene, p-chlorostyrene, p-methoxystyrene, indene (including indene derivatives) and mixtures thereof. If present, it is preferred to use the styrenic monomer in an amount of up to 5.0% by weight of the monomer mixture. The values of the C₄ to C₇ isomonoolefin monomer(s) will have to be adjusted accordingly to result again in a total of 100 % by weight.

The use of even other monomers in the monomer mixture is possible provided, of course, that they are copolymerizable with the other monomers in the monomer mixture. It may be advantageous to carry out a polymerization in the presence of a chain transfer agent. The invention is not restricted to any particular chain transfer agent, however, the chain transfer agent should preferably be a strong chain transfer agent - i.e., it should be capable of reacting with the growing polymer chain, terminate its further growth and subsequently initiate a new polymer chain. The type and amount of chain transfer agent is dependent upon. the amount of diisoalkenylbenzene compound. At low concentrations of diisoalkenylbenzene compound low amounts of chain transfer agent and/or a weak chain transfer agent can be employed. As the concentration of the diisoalkenylbenzene compound is increased, however, the chain transfer agent concentration should be increased and/or a stronger chain transfer agent should be selected. Use of a weak chain transfer agent should be avoided because too much can decrease the polarity of the solvent mixture and also would make the process uneconomical. The strength of the chain transfer agent may be determined conventionally - see, for example, J. Macromol. Sci.-Chem., A1(6) pp. 995-1004 (1967). A number called the transfer constant expresses its strength. According to the values published in this paper, the transfer constant of 1-butene is 0. Preferably, the chain transfer agent has a transfer coefficient of at least 10, more preferably at least 50. Non-limiting examples of useful chain transfer agents are piperylene, 1-methylcycloheptene, 1-methyl-cyclopentene, 2-ethyl-1-hexene, 2,4,4-trimethyl-1-pentene, indene and mixtures thereof. The most preferred chain transfer agent is 2,4,4-trimethyl-1-pentene.

The present invention is not restricted to a special process for preparing/polymerising the monomer mixture. This type of polymerisation is well known to the skilled in the art and usually.comprises contacting the reaction mixture described above with a catalyst system. Preferably, the polymerization is conducted at a temperature conventional in the production of butyl polymers - e.g., in the range of from -100°C to +50°C. The polymer may be produced by polymerization in solution or by a slurry polymerization method. Polymerization is preferably conducted in suspension (the slurry method) - see, for example, Ullmann's Encyclopedia of Industrial Chemistry (Fifth, Completely Revised Edition, Volume A23; Editors Elvers et al., 290-292).

The inventive polymer preferably has a Mooney viscosity ML (1+8 @125 °C) in the range of from 5 to 70 units, more preferably in the range of from 20 to 50 units.

As an example, in one embodiment the polymerization is conducted in the presence of an inert aliphatic hydrocarbon diluent (such as n-hexane) and a catalyst mixture comprising a major amount (in the range of from 80 to 99 mole percent) of a dialkylaluminum halide (for example diethylaluminum chloride), a minor amount (in the range of from 1 to 20 mole percent) of a monoalkylaluminum dihalide (for example isobutylaluminum dichloride), and a minor amount (in the range of from 0.01 to 10 ppm) of at least one of a member selected from the group comprising water, aluminoxane (for example methylaluminoxane) and mixtures thereof. Of course, other catalyst systems conventionally used to produce butyl polymers can be used to produce a butyl polymer which is useful herein - see, for example, "Cationic Polymerization of Olefins: A Critical Inventory" by Joseph P. Kennedy (John Wiley & Sons, Inc. © 1975, 10-12).

Polymerization may be performed both continuously and discontinuously. In the case of a continuous operation, the process is preferably performed with the following three feed streams:
I) solvent/diluent + isomonoolefin(s) (preferably isobutene)
II) multifunctional cross-linking agent(s), and optionally, multiolefin(s) (preferably diene, isoprene) and /or chain transfer agents
III) catalyst

In the case of discontinuous operation, the process may, for example, be performed as follows: The reactor, pre-cooled to the reaction temperature, is charged with solvent or diluent and the reactants. The initiator is then pumped in the form of a dilute solution in such a manner that the heat of polymerization may be dissipated without problem. The course of the reaction may be monitored by means of the evolution of heat.

The isoprene-containing polymer may be halogenated. Preferably, the introduced halogen is bromine or chlorine. Preferably, the amount of halogen is in the range of from 0.1 to 8%, more preferably from 0.5% to 4%, most preferably from 1.0 % to 3.0%, by weight of the polymer. The halogenated polymer will usually be produced by halogenating a previously-produced polymer derived from the monomer mixture described hereinabove. However, other possibilities are well known to the skilled in the art. One method to produce a halogenated tetrapolymer is disclosed in United States patent 5,886,106. Thus, the halogenated butyl-like rubber may be produced either by treating finely divided butyl-like rubber with a halogenating agent such as chlorine or bromine, or by producing brominated butyl-like rubber by the intensive mixing, in a mixing apparatus, of brominating agents such as N-bromosuccinimide with a previously made butyl rubber. Alternatively, the halogenated butyl-like rubber may be produced by treating a solution or a dispersion in a suitable organic solvent of a previously made butyl rubber with corresponding brominating agents. See, for more detail, Ullmann's Encyclopedia of Industrial Chemistry (Fifth, Completely Revised Edition, Volume A23; Editors Elvers et al., 314, 316-317). The amount of halogenation during this procedure may be controlled so that the final polymer has the preferred amounts of halogen described hereinabove.

The inventive polymer may be compounded. The compound comprises the inventive polymer and at least one active or inactive filler. The filler is preferably:
- highly dispersed silicas, prepared e.g., by the precipitation of silicate solutions or the flame hydrolysis of silicon halides, with specific surface areas of in the range of from 5 to 1000 m²/g, and with primary particle sizes in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibres and glass fibre products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the tetrapolymer. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

It might be advantageous to use a combination of carbon black and mineral filler in the inventive compound.' In this combination the ratio of mineral fillers to carbon black is usually in the range of from 0.05 to 20, preferably 0.1 to 10. For the rubber composition of the present invention it is usually advantageous to contain carbon black in an amount of in the range of from 20 to 200 parts by weight, preferably 30 to 150 parts by weight, more preferably 40 to 100 parts by weight.

The compound further comprises at least one peroxide curing system. The invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzol, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the compound is in the range of from 1 to 10 phr (= per hundred rubber), preferably from 1 to 5 phr. Subsequent curing is usually performed at a temperature in the range of from 100 to 200°C, preferably 130 to 180°C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

Even if it is not preferred, the compound may further comprise other natural or synthetic rubbers such as BR (polybutadiene), ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, NBR (butadiene/acrylonitrile-copolymers with acrylonitrile contents of 5 to 60 wt%, HNBR (partially or totally hydrogenated NBR-rubber), EPDM (ethylene/propylene/diene-copolymers), FKM (fluoropolymers or fluororubbers), and mixtures of the given polymers.

The compound described herein above can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend *inter alia* on the intended use. Conventional amounts are e.g. from 0.1 to 50 wt.%, based on rubber. Preferably the composition furthermore comprises in the range of 0.1 to 20 phr of an organic fatty acid, preferably an unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8 to 22 carbon atoms, more preferably 12-18. Examples include stearic acid, palmic acid and oleic acid and their calcium-, zinc-, magnesium-, potassium- and ammonium salts.

The ingredients of the final compound are mixed together, suitably at an elevated temperature that may range from 25 °C to 200°C. Normally the mixing time does not exceed one hour and a period of time from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different mixing devices, for example the first stage in an internal mixer and the second one in an extruder. However, it is important that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

The polymer prepared according to the inventive method and a compound comprising said polymer is useful for the manufacture of shaped rubber parts, such as containers for pharmaceuticals, in particular stopper and seals for glass or plastic vials, tubes, parts of syringes and bags for medical and non-medical applications, condenser caps and seals for fuel cells, parts of electronic equipment, in particular insulating parts, seals and parts of containers containing electrolytes, rings, dampening devices, ordinary seals, and sealants or shaped rubber parts either solid, foamed, or fluid filled useful to isolating vibrations and dampening vibrations generated by mechanical devices.

The invention is further illustrated by the following examples.

### Examples

Methyl chloride (Dow Chemical) serving as a diluent for polymerization and isobutylene monomer (Matheson, 99 %) were transferred into a reactor by condensing a vapor phase. Aluminum chloride (99.99 %) and m-diisopropenylbenzene (m-Di-IPB, 97 %) were from Aldrich and used as received. Commercial divinylbenzene (ca. 64 %) was from Dow Chemical. It was purified using a disposable inhibitor-removing column from Aldrich.

The mixing of a compound with carbon black (IRB #7) and peroxide (DI-CUP 40C, Struktol Canada Ltd.) was done using a miniature internal mixer (Brabender MIM) from C. W. Brabender, consisting of a drive unit (Plasticorder® Type PL-V151) and a data interface module.

The Mooney viscosity test was carried out according to ASTM standard D-1646 on a Monsanto MV 2000 Mooney Viscometer ML (1+8 @ 125 deg.C).

The Moving Die Rheometer (MDR) test was performed according to ASTM standard D-5289 on a Monsanto MDR 2000 (E). The upper die oscillated through a small arc of 1 degree.

The solubility of a polymer was determined after the sample refluxed in cylohexane over 60-minute period.

Curing was done using an Electric Press equipped with an Allan-Bradley Programmable Controller.

Stress-strain tests were carried out using the Instron Testmaster Automation System, Model 4464.

### Example 1 (comparative)

To a 50 mL Erlenmeyer flask, 0.45 g of AlCl₃ was added, followed by 100 mL of methyl chloride at - 30 °C. The resulting solution was stirred for 30 min at - 30 °C and then cooled down to - 95 °C, thus forming the catalyst solution.

To a 2000 mL glass reactor equipped with an overhead stirrer, 900 mL of methyl chloride at - 95 °C were added, followed by 120.0 mL isobutylene at - 95 °C and 2.4 mL of commercial DVB at room temperature. The reaction mixture was cooled down to - 95 °C and 10.0 mL of the catalyst solution was added to start the reaction.

The polymerization was carried out in MBRAUN® dry box under the atmosphere of dry nitrogen. The reaction was terminated after 10 minutes by adding into the reaction mixture 10 mL of ethanol containing some sodium hydroxide.

The obtained polymer (Polymer 1) was steam coagulated and dried in a vacuum oven at 70 °C to a constant weight.

The yield of the reaction was 95.0 % and the solubility of the rubber in cyclohexane was 26.1 %.

### Example 2

Example 1 was repeated except 1.92 mL of m-diisopropenylbenzene, measured at room temperature, was also added to the monomer feed.

The yield of the reaction was 98.9 % and the solubility of the rubber in cyclohexane was 22.9 %.

### Example 3

The polymers 1 and 2 were compounded using the following recipe:
Polymer: 100 phr
Carbon black (IRB #7): 50 phr
Peroxide: (DI-CUP 40C): 1 .0 phr

The mixing was done in a Brabender internal mixer (capacity ca. 75 cc). The starting temperature was 60 °C and the mixing speed 50 rpm. The following steps were carried out:
0 min: polymer added
1.5 min: carbon black added, in increments
7.0 min: peroxide added
8.0 min: mix removed

The obtained compounds (Compounds 1 & 2) were passed though a mill (6"x 12") six times with a tight nip gap.

The compounds were tested using the Moving Die Rheometer (MDR). Also, after curing at 160 °C they were tested for stress-strain properties.

The results are given in Table 1 and plotted in Figure 1.

**Table 1.**

| MDR characteristics of the compounds based on Polymers 1 and 2 (see also Fig. 1). | | | | |
|---|---|---|---|---|
| Polymer from | DVB in the feed (mL) | m-Di-IPB in the feed (mL) | MDR | Hardness Shore A2 (pts.) |
| | | | M_{H} (dN.m) | |
| Example 1 comparative | 2.4 | - | 10.99 | 48 |
| Example 2 | 2.4 | 1.92 | 10.65 | 47 |

**Table 2.**

| Stress strain characteristics of the compounds based on Polymers 1 and 2. | | | | |
|---|---|---|---|---|
| Polymer from | Stress-strain | | | |
| | Ultimate Tensile (MPa) | Ultimate Elongation (%) | Stress @ 100% (MPa) | Stress @ 200% (MPa) |
| Example 1 comparative | 2.92 | 184 | 1.88 | - |
| Example 2 | 5.07 | 267 | 1.92 | 3.95 |

The results show that although the maximum torque obtained in both cases was very similar, the compound based on polymer 2 did not undergo a reversion within the duration of the test (45 min), which was clearly the case for the compound based on Polymer 1 (Fig. 1). Consequently, the stress-strain properties for the compound 2 were better than for the compound 1.

## Claims

1. In a method of improving reversion resistance of a peroxide curable polymer comprising at least one polymer having repeating units derived from at least one isomonoolefin monomer and at least one aromatic divinyl monomer by polymerizing the monomers in the presence of at least one m- or p-diisoalkenylbenzene compound.

2. In a method according to claim 1, wherein the C₄ to C₇ isomonoolefin monomer(s) are selected from the group consisting of isobutylene, 2-methyl-1-butene, 3-methyl-1-butene, 2-methyl-2-butene, 4-methyl-1-pentene and mixtures thereof.

3. In a method according to claim 1 or 2, wherein the aromatic divinyl monomer(s) are selected from the group consisting of divinylbenzene, divinyltoluene, divinylxylene or C₁ to C₂₀ alkyl-substituted derivatives of the above compounds.

4. In a method according to any of claim 1 to 3, wherein the m- or p-diisoalkenylbenzene compound is a m- or p- isopropenylbenzene, m- or p-dimethallylbenzene or mixture thereof.
